# EUROPEAN PATENT SPECIFICATION

(11) **EP 2 928 258 B1**
(45) Date of publication and mention of the grant of the patent: **17.02.2021**
(21) Application number: 13868249.7
(22) Date of filing: 27.12.2013
(51) Int. Cl.: H04W 8/00, H04W 76/14, H04W 8/26

(54) **METHOD, MODULE AND TERMINAL DEVICE FOR DEVICE-TO-DEVICE COMMUNICATION**
VERFAHREN, MODUL UND ENDGERÄTEVORRICHTUNG FÜR VORRICHTUNG-ZU-VORRICHTUNG-KOMMUNIKATIONEN
PROCÉDÉ, MODULE ET DISPOSITIF DE TERMINAL PERMETTANT UNE COMMUNICATION DE DISPOSITIF À DISPOSITIF

(30) Priority: 31.12.2012 CN 201210590564
(43) Date of publication of application: 07.10.2015
(73) Proprietor: Huawei Technologies Co., Ltd., Longgang District Shenzhen, Guangdong 518129 (CN)
(72) Inventor: WANG, Rui, Shenzhen, Guangdong 518129 (CN); LIU, Sheng, Shenzhen, Guangdong 518129 (CN); YU, Rongdao, Shenzhen, Guangdong 518129 (CN); DU, Yinggang, Shenzhen, Guangdong 518129 (CN)
(74) Representative: Pfenning, Meinig & Partner mbB
(86) International application number: PCT/CN2013/090635
(87) International publication number: WO 2014/101812

(56) References cited:
- EP-A1- 2 530 958
- CN-A- 102 172 093
- CN-A- 102 244 584
- US-A1- 2010 040 029
- US-A1- 2011 258 313
- US-A1- 2012 135 711
- "3rd Generation Partnership Project; Technical Specification Group Services and System Aspects; Feasibility study for Proximity Services (ProSe) (Release 12)", 3GPP STANDARD; 3GPP TR 22.803, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG1, no. V12.0.0, 18 December 2012 (2012-12-18), pages 1-40, XP050691103, [retrieved on 2012-12-18]
- Gábor Fodor: "Design Aspects of Network Assisted Device-to-Device Communications", , 1 May 2011 (2011-05-01), pages 2-9, XP055059107, Retrieved from the Internet: URL:http://www.ericsson.com/res/docs/2012/ design-aspects-of-network-assisted-device- to-device-communications.pdf [retrieved on 2013-04-10]

## Description

### TECHNICAL FIELD

The present invention relates to communications technologies and, in particular, to a device-to-device communication method, a module and a terminal device.

### BACKGROUND

In conventional cellular communication, air interface has only two types of communication modes, that is, an uplink transmission from a terminal device to a base station and a downlink transmission from a base station to a terminal device. With the development of terminal devices, communication abilities are gradually developed between terminal devices, for example, a terminal device using bluetooth or WiFi can directly transfer data with another terminal device. The mode of a direct communication between terminal devices is known as device-to-device (Device-to-Device, hereinafter referred to as D2D) communication.

In fact, the D2D communication between the terminal device has been used not only in sharing data that generated by terminal device at local site, but also used in assisting terminal devices to acquire data from the network and share those network data, which is beneficial to reduce the cellular network load and user internet surfing cost. For example, a first and a second terminal devices, which are near to each other, try to download the same content from the internet (Internet), they can negotiate with each other and then each of them download only half of the required content, and then the downloaded content is exchanged between them through D2D communication, therefore the first and the second terminal devices obtain the required content, meanwhile user internet surfing cost and cellular network burden are reduced. Prior art provides only a solution to a joint transmission conducted by D2D and cellular communication, but without giving a solution of how to achieve a D2D communication between terminal devices.

EP 2530958A1 discloses a Machine-to-Machine/Man (M2M) platform communication system, including a plurality of M2M platforms, on which bottom terminals are registered. Each M2M platform includes: an upper application logic processing module and a bottom communication module, wherein the upper application logic processing module is configured to execute the application logic processing of the M2M platform to obtain a bottom message which includes a global network unique identifier of a target bottom terminal; and the bottom communication module is configured to route the bottom message to the target bottom terminal according to the global network unique identifier in the bottom message.

"3^{rd} Generation Partnership Project; Technical Specification Group Services and System Aspects; Feasibility study for Proximity Services (ProSe) (Release 12)" studies use cases and identify potential requirements for operator network controlled discovery and communications between UEs that are in proximity, under continuous network control, and are under 3GPP network coverage, for commercial/social use, network offloading, public safety and integration of current infrastructure services, and also studies use cases and identify potential requirements for public safety.

Gabor Fodor: "Design Aspects of Network Assisted Device-to-Device Communications" uses the 3GPP Long Term Evolution system as a baseline for D2D design, reviews some of the key design challenges, and propose solution approaches that allow cellular devices and D2D pairs to share spectrum resources and thereby increase the spectrum resources and thereby increase the spectrum and energy efficiency of traditional cellular networks.

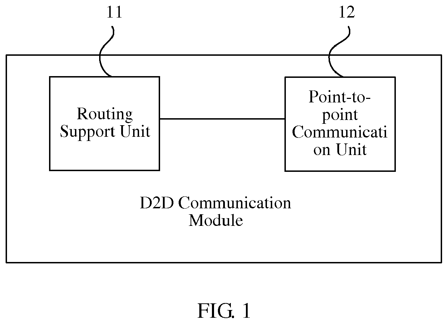

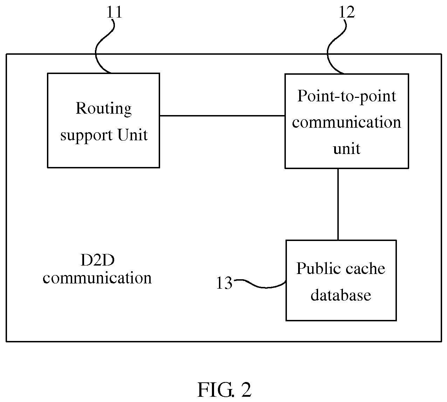

US 2012/0135711 A1 discloses the wireless communication device 120 of FIG. 2 also includes a short-range transmitter 172 that is used by the wireless communication device 120 for direct communication with other jump-enabled wireless communication devices (e.g., the wireless communication device 122 of FIG. 1). FIG. 2 also illustrates a short-range receiver 174 that operates in conjunction with the short-range transmitter 172 to communicate directly with other jump-enabled wireless communication devices (e.g., the wireless communication device 122 of FIG. 1).

### SUMMARY

Embodiments of the present invention provide a device-to-device communication method, a module and a terminal device to resolve the problem of achieving D2D communication between terminal devices.

A first aspect provides a device-to-device (D2D) communication module, which is set in a first terminal device, and the D2D communication module includes:
a routing support unit, configured to generate an identification (ID) of the D2D communication module, discover a neighbor D2D communication module, establish a link with the neighbor D2D communication module, and maintain routing information between the D2D communication module and the neighbor D2D communication module, where the neighbor D2D communication module is set in the second terminal device; and
a point-to-point communication unit, configured to communicate with the neighbor D2D communication module according to the ID of the D2D communication module and the routing information between the D2D communication module and the neighbor D2D communication module;
wherein the point-to-point communication unit is specifically configured to obtain first network data provided by the first terminal device, and transmit the first network data to the neighbor D2D communication module according to the ID of the D2D communication module and the routing information between the D2D communication module and the neighbor D2D communication module;
where the routing support unit is further configured to obtain an ID of the neighbor D2D module and a port number of an air interface via discovery mechanism,
the point-to-point communication unit is specifically configured to obtain the first network data provided by a first application program on the first terminal device, allocate a first port to the first application program, notify the neighbor D2D module that a first application program on the first terminal device transmits data in a connection-oriented communication mode, establish a connection from the ID of the D2D communication module and the first port to the ID of the neighbor D2D communication module and a second port allocated to a second application program by the neighbor D2D communication module, package the first network data to obtain a data packet according to the ID of the D2D communication module, a port number of the first port, the ID of the neighbor D2D communication module, and a port number of the second port allocated to the second application program by the neighbor D2D communication module, and transmit the data packet to the neighbor D2D communication module via the connection, where the second application program is an application program which is on the second terminal device and communicates with the first application program.

A second aspect provides a device-to-device (D2D) communication method, where the method includes:
generating, by a D2D communication module set in a first terminal device, an identification (ID) of the D2D communication module; discovering a neighbor D2D communication module; and maintaining routing information between the D2D communication module and the neighbor D2D communication module, where the neighbor D2D communication module is set in a second terminal device; and
communicating, by the D2D communication module, with the neighbor D2D communication module according to the ID of the D2D communication module and the routing information of the D2D communication module;
where the communicating, by the D2D communication module, with the neighbor D2D communication module according to the ID of the D2D communication module and the routing information includes:
   receiving, by the D2D communication module, first network data provided by the first terminal device, and transmitting the first network data to the neighbor D2D communication module according to the ID of the D2D communication module and the routing information;
   where the method further includes:
      obtaining, by the D2D communication module, an ID of the neighbor D2D module and a port number of an air interface via discovery mechanism;
      where the obtaining, by the D2D communication module, the first network data provided by the first terminal device, and transmitting the first network data to the neighbor D2D communication module according to the ID of the D2D communication module and the routing information includes:
         obtaining, by the D2D communication module, the first network data provided by a first application program on the first terminal device;
         allocating, by the D2D communication module, a first port to the first application program, notifying the neighbor D2D module that a first application program on the first terminal device transmits data in a connection-oriented communication mode, establishing a connection from the ID of the D2D communication module and the first port to the ID of the neighbor D2D communication module and a second port allocated to a second application program by the neighbor D2D communication module, packaging the first network data to obtain a data packet according to the ID of the D2D communication module, a port number of the first port, the ID of the neighbor D2D communication module, and a port number of the second port allocated to a second application program by the neighbor D2D communication module, and transmitting the data packet to the neighbor D2D communication module via the connection, where the second application program is an application program which is on the second terminal device and communicates with the first application program.

A third aspect provides a terminal device, which includes any one of the device-to-device (D2D) communication module provided in the first aspect and at least one D2D air interface; where the D2D communication module communicates with a neighbor D2D communication module via the at least one D2D air interface.

Embodiments of the present invention provide the device-to-device communication method, the device-to-device communication module and the terminal device. Each terminal device is set with the D2D communication module. Specifically, each D2D communication module generates the ID of the D2D communication module through its own routing support unit, discovers the neighbor D2D communication module and maintains routing information with neighbor D2D communication module, and a point-to-point communication unit performs the communication with the neighbor D2D communication module according to the ID of the D2D communication module itself and the routing information maintained by the routing support unit, thereby achieving D2D communication between terminal devices.

### BRIEF DESCRIPTION OF DRAWINGS

In order to clearly illustrate the technical solutions in embodiments of the present invention or in prior art, the drawings described in the embodiments or in prior art are briefly introduced as followed. It is obvious that the drawings described as followed are merely some embodiments of the present invention, for those skilled in the art, without doing any creative work, other drawings can be obtained according to the following drawings.
FIG. 1 is a schematic structural diagram of a D2D communication module according to an embodiment of the present invention;
FIG. 2 is a schematic structural diagram of a D2D communication module according to another embodiment of the present invention;
FIG. 3 is a schematic diagram of an implementation structure of a terminal device according to an embodiment of the present invention;
FIG. 4 is a schematic structural diagram of a D2D communication module according to still another embodiment of the present invention; and
FIG. 5 is a flowchart of a D2D communication method according to an embodiment of the present invention.

### DESCRIPTION OF EMBODIMENTS

To make the objective, technical solutions and advantages of embodiments of the present invention more clearly, the technical solutions of embodiments of the present invention are hereinafter described in detail and completely with reference to the drawings of embodiments of the present invention. It is obvious that the described embodiments are merely partial embodiments of the present invention, rather than all embodiments. Based on the embodiments of the present invention, any other embodiments obtained by those skilled in the art without doing any creative work are all within the protection scope of the present invention.

To resolve the problem of achieving a D2D communication between terminal devices, embodiments of the present invention provide technical solutions. In the technical solutions, each terminal device is set with a D2D communication module, where the D2D communication module is responsible for achieving the D2D communication between the terminal devices. The D2D communication module set in any one of the terminal devices has the same function. For describing conveniently, the following embodiments of the present invention will be described by taking a D2D communication module set in a first terminal device as an example, and a D2D communication module, set in other terminal devices that can act as the neighbor of the first terminal device, is called a neighbor D2D communication module; and the terminal device, where the neighbor D2D communication module is located, is called a second terminal device. It should be noted here that the number of the neighbor D2D communication module and that of the second terminal device are the same, and the number may be one and may also be more than one.

FIG.1 is a schematic structural diagram of a D2D communication module according to an embodiment of the present invention. The D2D communication module in this embodiment is set in a first terminal device, as shown in FIG.1, the D2D communication module in this embodiment includes: a routing support unit 11 and a point-to-point communication unit 12.

The routing support unit 11 is configured to generate an identification (ID) of the D2D communication module in this embodiment, discover a neighbor D2D communication module, and maintain routing information between the D2D communication module and the neighbor D2D communication module in this embodiment. In this embodiment, the neighbor D2D communication module is set in a second terminal device.

The point-to-point communication unit 12 is configured to communicate with the neighbor D2D communication module according to the ID of the D2D communication module in this embodiment and the routing information between the D2D communication module in this embodiment and the neighbor D2D communication module maintained by the routing support unit 11.

In this embodiment, the first and the second terminal devices have a D2D communication ability, meanwhile, in addition to the D2D communication ability, have other communication abilities such as a cellular communication ability, so as to strengthen the advantages of a joint transmission by using the D2D communication ability and other communication abilities (e.g. a cellular communication ability). Each terminal device having a D2D communication ability all need to communicate with as many other terminal devices having D2D communication ability as possible, so as to increase the possibility of conducting the joint transmission.

Based on the above, the routing support unit 11 in this embodiment will drive an air interface of the D2D communication module to discover the nearby second terminal devices as many as possible, for maintaining more routing information between the D2D communication module in this embodiment and the neighbor D2D communication module. In this embodiment, the air interface of the D2D communication module is called a D2D air interface. This embodiment does not limit the implementation of the D2D air interface, for example the D2D air interface may be but not be limited to: WiFi Direct, bluetooth, or in-band D2D communication air interface of future cellular communication and so on.

For different D2D air interfaces, the routing support unit 11 may maintain routing information with the neighbor D2D communication module in different manners. A WiFi Direct air interface will be taken as an example in the following for describing how the routing support unit 11 maintains the routing information between the D2D communication module in this embodiment and the neighbor D2D communication module. Specifically, the WiFi Direct air interfaces, before conducting the communication between terminal devices, firstly forms several groups (Group), and each Group has a group owner (Group Owner) who servers a function that is similar to that of an access point (Access Point, hereinafter referred to as AP). Within each Group, each terminal device can directly communicate with each other. Based on the characteristics of the WiFi Direct air interface, the routing support unit 11 in this embodiment needs to drive the first terminal device to join more Groups where the second terminal device is located, and drives a data transfer performed by terminal devices across different Groups, so that a single hop or a multiple hops communication can be conducted via a WiFi Direct protocol.

For example, a specific implementation of driving the first terminal device to join more Groups where the second terminal device is located by the routing support unit 11 includes: the routing support unit 11 in the first terminal device searches for Groups around via the WiFi Direct air interface. If there are formed Groups around, the routing support unit 11 drives the first terminal device to try to join these Groups. After joining these Groups, the routing support unit 11 try to discover whether the Group Owners in these Groups have a D2D communication module, if the Group Owners have the D2D communication module, then the terminal devices in these Groups are taken as the second terminal devices, and the D2D communication modules in these terminal devices are the neighbor D2D communication modules of the D2D communication module in this embodiment. Alternatively, the routing support unit 11 may maintain a neighboring relationship between the D2D communication module in this embodiment and the neighbor D2D communication module by broadcasting a neighbor list. When a neighbor D2D communication module is discovered, the routing support unit 11 updates the neighbor list, i.e., the information of the newly discovered D2D communication module is added to the neighbor list. If there is no Group around, or the routing support unit 11 cannot drive the first terminal device to join the formed Group, or it is discovered that there are other terminal devices which may have the D2D communication module but still does not join the formed Group around, then the routing support unit 11 drives the first terminal device to form a Group by itself, and act as the Group Owner, when a new terminal device joins, the routing support unit 11 tries to discover whether there is a D2D communication module running in the new terminal device, if there is a D2D communication module in the new terminal device, the new terminal device is taken as the second terminal device, and the D2D communication module in the new terminal device is the neighbor D2D communication module of the D2D communication module in this embodiment, there may be one or multiple second terminal devices. As such, the D2D communication modules of different terminal devices constitute an Ad Hoc network, in this case the routing support unit 11 can establish a routing table of the neighbor D2D communication module by using various existing algorithms of the Ad Hoc network. In the routing table, for a single hop neighbor D2D communication module, the maintained routing information includes an ID of the single hop neighbor D2D communication module and a D2D air interface which is used by the D2D communication module in this embodiment for reaching the neighbor D2D communication module; for a multiple hops neighbor D2D communication module, the maintained routing information includes an ID of the multiple hops neighbor D2D communication module, an ID of a next hop neighbor D2D communication module and a D2D air interface used by the next hop neighbor D2D communication module.

Though the above method, the routing support unit 11 can not only maintain routing information between the D2D communication module in this embodiment and the neighbor D2D communication module but also drive the D2D communication module in this embodiment to discover more neighbor D2D communication modules.

In addition, since this embodiment support several types of D2D air interfaces, when an application program on the first terminal device calls a D2D air interface via the point-to-point communication unit (e.g. receiving or transmitting network data via the D2D air interface), the point-to-point communication unit 12 will encapsulate discrepancies between D2D air interfaces for the application program invoking the D2D air interface, that is, the application program does not need to concern about details of using D2D air interface, and those details are responsible by the point-to-point communication unit 12.

In this embodiment, the D2D communication module in each terminal device owns an ID, so that the D2D communication module is uniquely identified. The ID of the D2D communication module may be generated by the routing support unit 11 according to the medium access control (Medium Access Control, hereinafter referred to as MAC) address of the terminal device in which the D2D communication module is located, to ensure that a circumstance that D2D communication modules in different terminal devices have the same ID will never happen. In addition, the ID of the D2D communication module is also maintained by the routing support unit 11.

The point-to-point communication unit 12 may achieve the communication between the D2D communication module in this embodiment and the neighbor D2D communication module through the following method: similar to transmission control protocol (Transmission Control Protocol, hereinafter referred to as TCP) and user datagram protocol (User Datagram Protocol, hereinafter referred to as UDP) services, the point-to-point communication unit 12 may provide two types of communication links between one process of the first terminal device and one process of the second terminal device: a connection-oriented communication link (similar to TCP) and a connectionless-oriented communication link (similar to UDP). Likewise, similar to the TCP or UDP protocol, the point-to-point communication unit 12 allocates port to the application program using the point-to-point communication unit 12 to transmit or receive data. A data transmitting end or receiving end on the first terminal device may be uniquely identified by using the ID of the D2D communication module in this embodiment and the port number of the corresponding application program. When the application program transmits data in the connectionless-oriented communication mode, the point-to-point communication unit 12 in the D2D communication module at the transmitting end does not need to notify the point-to-point communication unit 12 in the D2D communication module at the receiving end in advance, but can directly transmit the data to the point-to-point communication unit 12 in the D2D communication module at the receiving end. When the application program transmits data in the connection-oriented communication mode, the point-to-point communication unit 12 in the D2D communication module at the transmitting end needs to notify the point-to-point communication unit 12 in D2D communication module at the receiving end in advance, and establish a connection from the ID of the D2D communication module at the transmitting end and the port of the application program at the transmitting end to the ID of the D2D communication module at the receiving end and the port of the application program at the receiving end, after that, the port of the above application program at the receiving end will only receive data transmitted from the port of the above application program at the transmitting end.

When using the connection-oriented communication mode, the point-to-point communication unit 12 in the D2D communication module at the transmitting end needs to guarantee a reliable and ordered data transmission, based on this, the point-to-point communication unit 12 in the D2D communication module at the transmitting end segments the data to be transmitted according to a fixed size, and each segment is packaged using a data packet, where the data packet includes at least the following information: the ID of the D2D communication module at the transmitting end and the port number of the application program at the transmitting end, the ID of the D2D communication module at the receiving end and the port number of the application program at the receiving end, and a sequence number of the data packet, where the sequence number is used for sorting the data packet by the point-to-point communication unit 12 at the receiving end. Correspondingly, the point-to-point communication unit 12 in the D2D communication module at the receiving end needs to acknowledge (Acknowledge) a reception of the data packet transmitted by the point-to-point communication unit 12 in the D2D communication module at the transmitting end. The algorithms for acknowledging a transmission and a reception may refer to a sliding window protocol of TCP, and will not be repeated here.

Based on the above communication modes, a case of the point-to-point communication unit 12 configured to communicate with the neighbor D2D communication module according to the ID of the D2D communication module in this embodiment and the routing information between the D2D communication module in this embodiment and the neighbor D2D communication module maintained by the routing support unit 11 includes:
The point-to-point communication unit 12 is specifically configured to receive first network data provided by the first terminal device, and transmit the first network data to the neighbor D2D communication module according to the ID of the D2D communication module in this embodiment and the routing information maintained by the routing support unit 11.

Further, the point-to-point communication unit 12 is specifically configured to receive the first network data provided by a first application program on the first terminal device, allocate a first port to the first application program, package the first network data to obtain a data packet according to the ID of the D2D communication module in this embodiment, the port number of the first port, the ID of the neighbor D2D communication module and a port number of a second port allocated to a second application program by the neighbor D2D communication module, , and transmit the packaged data packet to the neighbor D2D communication module through the routing information maintained by the routing support unit 11, where the second application program is an application program which is on the second terminal device, in which the neighbor D2D communication module is located, and communicates with the first application program. It should be noted that, the application programs on the two terminal devices achieves the D2D communication with each other by calling the D2D communication module in the terminal device in which the corresponding application program is located.

Alternatively, the first network data provided by the first application program may be directly downloaded from a network server by the first application program. Based on this, the point-to-point communication unit 12 may specifically be configured to receive the first network data directly downloaded from the network server by the first application program on the first terminal device.

Alternatively, a case of the point-to-point communication unit 12 configured to communicate with the neighbor D2D communication module according to the ID of the D2D communication module in this embodiment and the routing information between the D2D communication module in this embodiment and the neighbor D2D communication module maintained by the routing support unit 11 includes:
The point-to-point communication unit 12 is specifically configured to receive the second network data transmitted by the neighbor D2D communication module according to the ID of the D2D communication module in this embodiment and the routing information maintained by the routing support unit 11. The second network data transmitted by the neighbor D2D communication module may be transmitted by the second application program on the second terminal device in which the neighbor D2D communication module is located via the neighbor D2D communication module.

It can be seen that, in this embodiment, each terminal device is set with a D2D communication module. Specifically, each D2D communication module generates the ID of the D2D communication module through its own routing support unit, discovers the neighbor D2D communication module and maintains routing information with neighbor D2D communication module, and a point-to-point communication unit performs the communication with the neighbor D2D communication module according to the ID of the D2D communication module itself and the routing information maintained by the routing support unit, thereby achieving D2D communication between terminal devices. Further, according to the D2D communication module in this embodiment, data sharing can be realized among terminal devices, if a joint transmission is performed with cellular communication, the burden of the cellular communication is greatly reduced, and cost of users experience and internet surfing will also be greatly reduced. In addition, it is only need to deploy a D2D communication module in this embodiment in a terminal device without modifying an existing wireless communication system, which is easy to achieve and have a relative lower deployment cost.

FIG. 2 is a schematic structural diagram of a D2D communication module according to another embodiment of the present invention. This embodiment is achieved based on the embodiment shown in FIG. 1. As can be seen from FIG. 2, the D2D communication module in this embodiment also includes: a public cache database 13.

The public cache database 13 is configured to receive the first network data provided by the first terminal device and store data. It should be noted that, the public cache database 13 may store network data transmitted by each application program on the first terminal device, this embodiment is described by taking the first application program on the first terminal device as an example, then the public cache database 13 is specifically configured to receive the first network data transmitted by the first application program on the first terminal device and store data. While the first application program submits the first network data to the public cache database 13, the first application program also needs to submit identification information of the first network data to the public cache database 13. The identification information of the first network data may be but not be limited to the network address of the first network data, for uniquely identifying the first network data. For example: if the first network data is a file downloaded from a certain website, then the identification information of the first network data is a specific address of the file on the internet. For example, the identification information of the first network data may also be the name of the first network data.

Alternatively, while the first application program submits the first network data to the public cache database 13, the first application program may also submit a period of validity of the first network data to the public cache database 13, so that the public cache database 13 can delete the first network data after the period of validity is expired, which is beneficial for improving the use efficiency of the public cache database 13.

The public cache database 13 in this embodiment may also be configured to provide stored network data to the application program on the first terminal device or the second terminal device. In this embodiment, the point-to-point communication unit 12 will allocate a port to the public cache database 13, so as to enable the public cache database 13 to provide the stored network data to the application program on the first terminal device or the second terminal device. To distinguish the ports used in each embodiment of the present invention easily, the port allocated to the public cache database 13 by the point-to-point communication unit 12 is recorded as the fourth port.

Taking a first application program on the first terminal device requesting a third network data from the public cache database 13 as an example, the public cache database 13 is also configured to receive a first query request for querying for the third network data transmitted by the first application program, perform a query according to the first query request and return a first query result to the first application program, where the first query request includes identification information of the third network data.

It should be noted that, when the first application program queries the local public cache database 13, the first query request transmitted by the first application program may carry an ID of the D2D communication module at the transmitting end (the ID of the D2D communication module at the transmitting end herein is the ID of the D2D communication module in this embodiment), the port number of the first port allocated to the first application program by the point-to-point communication unit 12, an ID of the D2D communication module at the receiving end (the ID of the D2D communication module at the receiving end herein is also the ID of the D2D communication module in this embodiment), and a port number of a four port allocated to the public cache database 13 by the point-to-point communication unit 12, and may also do not carry these IDs and port number information.

Further, the public cache database 13 is also configured to maintain a neighbor index table, where the neighbor index table stores identification information of network data stored in the neighbor D2D communication module. That is to say, the public cache database 13 in each D2D communication module can exchange identification information of the stored network data in the form of the neighbor index table, thus, the application program can not only query the network data stored in the local public cache database 13, but also query information of network data stored in a remote public cache database 13 at home.

Based on the above, the public cache database 13 is specifically configured to receive the first query request for querying for the third network data transmitted by the first application program, perform a local query according to the identification information of the third network data, if the third network data is obtained through the local query, take the third network data as the first query result and return to the first application program; and if the third network data is not obtained through the local query , query the maintained neighbor index table according to the identification information of the third network data, if there is a neighbor index table including the identification information of the third network data, take the ID of a first neighbor D2D communication module, which corresponds to the neighbor index table including the identification information of the third network data, as the first result and return to the first application program. In this embodiment, for describing conveniently, a neighbor D2D communication module, which corresponds to the neighbor index table including the identification information of the third network data, is called the first neighbor D2D communication module. The first neighbor D2D communication module is one of the neighbor D2D communication modules of the D2D communication module in this embodiment.

Based on the above, still another case of the point-to-point communication unit 12 configured to communicate with the neighbor D2D communication module according to the ID of the D2D communication module in this embodiment and the routing information between of the D2D communication module in this embodiment and the neighbor communication module maintained by the routing support unit 11 includes:
The point-to-point communication unit 12 is specifically configured to receive a second query request transmitted by the first application program, transmit the second query request to the first neighbor D2D communication module according to the ID of the D2D communication module in this embodiment and the routing information maintained by the routing support unit 11, and receive a second query result returned by the first neighbor D2D communication module according to the second query request, and then return the second query result to the first application program. The second query request is generated by the first application program according to the ID of the first neighbor D2D communication module when the first query result is the ID of the first neighbor D2D communication module. The second query request includes the ID of the D2D communication module in this embodiment, the port number of the first port allocated to the first application program by the point-to-point communication unit 12 in the D2D communication module in this embodiment, the ID of the first neighbor D2D communication module, the port number of the third port allocated to the public cache database of the first neighbor D2D communication module by the point-to-point communication unit 12 of the first neighbor D2D communication module, and the identification information of the third network data.

Based on the public cache database 13, still another case of the point-to-point communication unit 12 configured to communicate with the neighbor D2D communication module according to the ID of the D2D communication module in this embodiment and the routing information between the D2D communication module in this embodiment and the neighbor D2D communication module maintained by the routing support unit 11 includes:
The point-to-point communication unit 12 is specifically configured to receive a third query request transmitted by the neighbor D2D communication module and return a third query result to the neighbor D2D communication module according to the ID of the D2D communication module in this embodiment and the routing information maintained by the routing support unit 11. The third query request includes the ID of the D2D communication module in this embodiment, a port number of a fourth port allocated to the public cache database 13 of the D2D communication module in this embodiment by the point-to-point communication unit 12 in the D2D communication module in this embodiment, the ID of the neighbor D2D communication module, a port number of a fifth port allocated to a third application program on the second terminal device by the point-to-point communication unit 12 of the neighbor D2D communication module, and identification information of the fourth network data which is requested to be queried for by the third application program.

Accordingly, the public cache database 13 is also configured to receive the third query request transmitted by the point-to-point communication unit 12, perform a local query according to the third query request, and return a third query result to the point-to-point communication unit 12. The third query result herein may be the fourth network data obtained through query, or a result indicating query failed.

Alternatively, to facilitate performing a query by a local or a remote application program, the public cache database 13 may monitor a query request on the fourth port allocated by the point-to-point communication unit 12 so as to return a query result to each application program on time. The port number of the fourth port used by the public cache database 13 is known to all application programs.

As can be seen from above, the public cache database in this embodiment may be queried by the application program on the local first terminal device, and return a query result, in addition, may also receive a query result transmitted by an application program on the second terminal device via the point-to-point communication unit of the second terminal device, and support a remote query, thereby allowing the coordination between terminal devices. Besides, since the D2D communication module in this embodiment provides the public cache database storing network data, different application programs on the same or different terminal devices can share network data, these different application programs do not need to have the ability to directly communicate with each other, and they share network data through the public cache database, in this case, sharing data is no longer limited to between the same application programs.

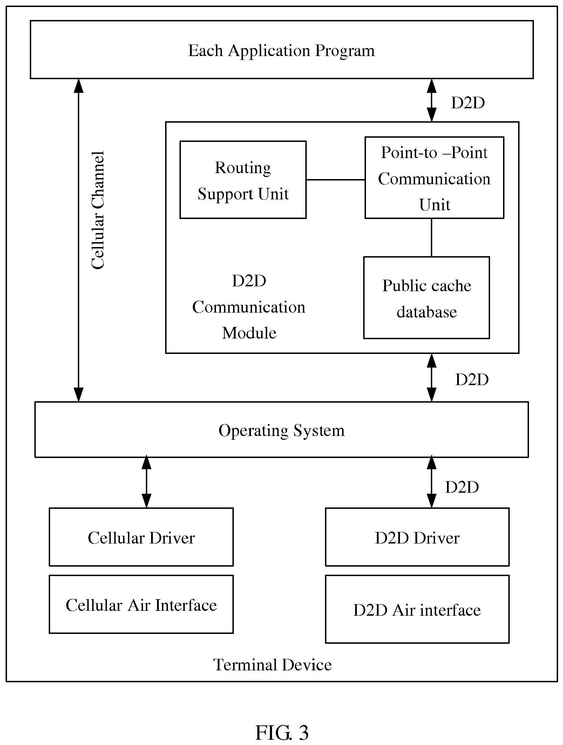

Based on the D2D communication module in this embodiment, FIG. 3 shows a schematic diagram of an implementation structure of a terminal device simultaneously having a cellular communication ability and a D2D communication ability. As shown in FIG. 3, the terminal device includes: each application program, a D2D communication module, a cellular channel, an operating system, a cellular driver, a cellular air interface, a D2D driver and a D2D air interface. The hierarchical relationship among the above elements is shown in FIG. 3, which will not be repeated here in detail.

Embodiments of the present invention provides a terminal device, including a D2D communication module provided in the above embodiments and at least one D2D air interface; where, the D2D communication module communicates with a neighbor D2D communication module via the at least one D2D air interface. Specifically, the D2D communication module may manage simultaneously at least one D2D air interface, and operations to these D2D air interface performed by an upper level application program is irrelevant to a specific air interface, the D2D communication module can masking the discrepancies between the D2D air interfaces, please refer to the description in the above embodiments for detail.

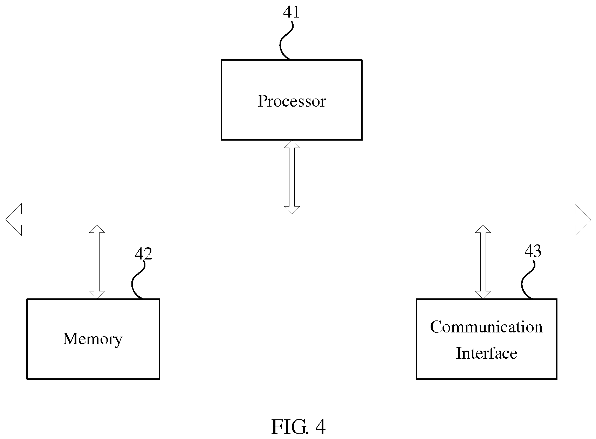

FIG. 4 is a schematic structural diagram of a D2D communication module according to another embodiment of the present invention. The D2D communication module in this embodiment is set in a first terminal device, as described in FIG. 4, the D2D communication module in this embodiment includes: a processors 41, a memory 42 and a communication interface 43.

The memory 42 is configured to store a program. Specifically, the program may include program code, and the program code includes a computer operating instruction. The memory 42 may include a high speed RAM memory, and may also include a non-volatile memory (non-volatile memory) such as at least one disk memory.

The processor 41 is configured to execute the program stored in the memory 42, in order to: generate an identification ID of the D2D communication module in this embodiment, discover a neighbor D2D communication module, and maintain routing information between the D2D communication module in this embodiment and the neighbor D2D communication module. In this embodiment, the neighbor D2D communication module is set in a second terminal device.

The processor 41 may be a central processor unit (Central Processor Unit, hereinafter referred to as CPU), or an application specific integrated circuit (Application Specific Integrated Circuit, hereinafter referred to as ASIC), or configured to be one or a plurality of integrated circuit implementing embodiments of the present invention.

The communication interface 43 is configured to communicate with the neighbor D2D communication module according to the ID of the D2D communication module in this embodiment and routing information maintained by the processor 41.

The processor 41 and the communication interface 43 of the D2D communication module in this embodiment may cooperate with each other to achieve other functions of the D2D communication modules in the embodiments given in the FIG. 1 and FIG. 2, which will not be repeated here.

Alternatively, in a detailed implementation, if the processor 41, the memory 42 and the communication interface 43 are implemented individually, the processor 41, the memory 42 and the communication interface 43 may connect with each other via a bus 44 and achieve communication with each. The bus 44 may be an industry standard architecture (Standard Architecture, hereinafter referred to as ISA) bus, a peripheral component (Peripheral Component, hereinafter referred to as PCI) bus or an extended industry standard architecture (Extended Industry Standard Architecture, hereinafter referred to as EISA) bus and so on. The bus 44 may be classified into an address bus, a data bus, and a control bus. For describing conveniently, only a thick line is displayed in FIG. 4. However, it does not mean only one bus or one type of bus.

Alternatively, in a detailed implementation, if the processor 41, the memory 42 and the communication interface 43 are implemented by integrating on one chip, the processor 41, the memory 42 and the communication interface 43 can achieve the communication with each other via an internal interface.

In this embodiment, each terminal device is set with a D2D communication module. Specifically, each D2D communication module generates an ID of a D2D communication module via a processor of the D2D communication module itself, discovers a neighbor D2D communication module and maintains routing information with the neighbor D2D communication module, and the communication interface performs communication with the neighbor D2D communication module according to the ID of the D2D communication module and the routing information maintained by the processor, thereby realizing the D2D communication between terminal devices.

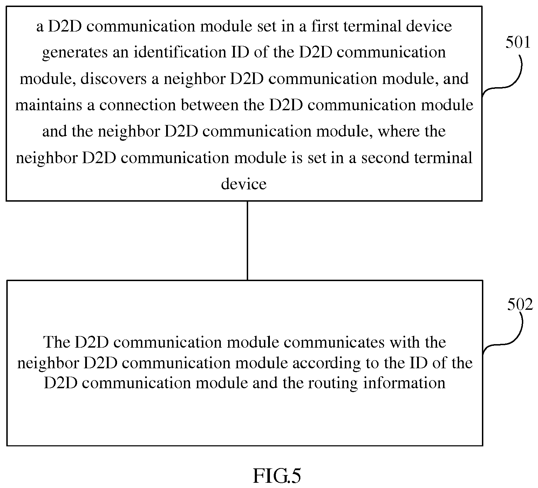

FIG. 5 is a flowchart of a D2D communication method according to embodiments of the present invention. The method of this embodiment can be achieved by the D2D communication module provided in the above embodiment. As shown in FIG. 5, the method of this embodiment includes:
Step 501, a D2D communication module set in a first terminal device generates an identification ID of the D2D communication module, discovers a neighbor D2D communication module, and maintains a connection between the D2D communication module and the neighbor D2D communication module, where the neighbor D2D communication module is set in a second terminal device; and
Step 502, the D2D communication module communicates with the neighbor D2D communication module according to the ID of the D2D communication module and the routing information.

In an alternative implementation, an implementation procedure of step 502 includes: the D2D communication module receives first network data provided by the first terminal device, and transmits the first network data to the neighbor D2D communication module according to the ID of the D2D communication module and the routing information.

Specifically, the D2D communication module receives the first network data provided by a first application program on the first terminal device; the D2D communication module allocates a port to the first application program, packages the first network data to obtain a data packet according to the ID of the D2D communication module, a port number of the first port, an ID of the neighbor D2D communication module and a port number of a second port allocated to a second application program by the neighbor D2D communication module, and transmits the data packet to the neighbor D2D communication module through the routing information, where the second application program is an application program which is on the second terminal device and communicates with the first application program. Alternatively, the D2D communication module may receive the first network data directly downloaded from a network server by the first application program on the first terminal device.

In an alternative implementation, another implementation procedure of step 502 includes: the D2D communication module receives second network data transmitted by the neighbor D2D communication module according to the ID of the D2D communication module and the routing information.

In an alternative implementation, the D2D communication method in this embodiment further includes: the D2D communication module receives the first network data provided by the first terminal device, and stores the first network data into a public cache database.

Based on this, the D2D communication method in this embodiment further includes: the D2D communication module receives a first query request for querying for third network data transmitted by the first application program on the first terminal device, performing a query according to the first query request and returning a first query result to the first application program, where the first query request includes identification information of the third network data.

Further, the performing a query, by the D2D communication module, according to the first search request and returning a first query result to the first application program, includes:
The D2D communication module performs a local query according to the identification information of the third network data; if the third network data is obtained through the local query, the D2D communication module takes the third network data as the first query result and returns to the first application program; and if the third network data is not obtained through the local query, the D2D communication module queries the maintained network data table according to identification information of the third network data, if there is a neighbor index table including the identification information of the third network data, takes the ID of a first neighbor D2D communication module, which corresponds to the neighbor index table including the identification information of the third network data, as the first result and return to the first application program, where, identification information of network data stored in the neighbor D2D communication module is stored in the neighbor index table.

Based on the above, another implementation of step 502 process includes: the D2D communication module receives a second query request transmitted by the first application program; where the second query request is generated by the first application program according to the ID of the first neighbor D2D communication module when the first query result is the ID of the first neighbor D2D communication module, and the second query request includes the ID of the D2D communication module, a port number of a first port allocated to the first application program by the D2D communication module, the ID of the first neighbor D2D communication module, a port number of a third port allocated to a public cache database on the first neighbor D2D communication module by the first neighbor D2D communication module, and identification information of the third network data; the D2D communication module, transmits the second query request to the first neighbor D2D communication module according to the ID of the D2D communication module and the routing information, and receiving the second query result returned by the first D2D communication module according to the second query request; the D2D communication module returns the second query result to the first application program.

In an alternative implementation, another implementation procedure of step 502 includes: the D2D communication module receives a third query request transmitted by the neighbor D2D communication module, according to the ID of the D2D communication module and the routing information, where the third query request includes the ID of the D2D communication module, a port number of a fourth port allocated to the public cache database by the D2D communication module, the ID of the neighbor D2D communication module, a port number of a fifth port allocated to a third application program on the second terminal device by the neighbor D2D communication module, and identification information of fourth network data which is requested to be queried for by the third application; the D2D communication module performs a local query according to the third query request, and return the third query result to the neighbor D2D communication module.

As can be seen from the above, in this embodiment, each terminal device is set with D2D communication module. Specifically, each D2D communication module generates the ID of the D2D communication module through its own routing support unit, discovers the neighbor D2D communication module and maintaining routing information with the neighbor D2D communication module, the point-to-point communication unit performs the communication with the neighbor D2D communication module according to the ID of D2D communication module itself and the routing information maintained by routing support unit, thereby achieving the D2D communication between terminal devices. Furthermore, in this embodiment, data sharing can be realized among terminal devices through the set D2D communication module, if a joint transmission is performed with a cellular communication, the burden of the cellular communication is greatly reduced, and cost of users experience and internet surfing will also be greatly reduced. Furthermore, in this embodiment, it is only required to deploy a D2D communication module in a terminal device without modifying the existing wireless communication systems, which is easy to achieve and have a relative lower deployment cost.

Those skilled in the art can understand that: the steps for achieving the methods of the embodiments, partial or all of them, can be completed using a program relating hardware. The aforementioned program is stored in a readable storage medium of a computer. When executing the program, the steps including the above method of the embodiment are executed; the aforementioned storage medium includes: a media that can store program code, such as an ROM, an RAM, a magnetic disk or an optical disk.

Finally, it should be noted that the foregoing embodiments are merely intended for describing the technical solutions of the present invention rather than limiting the present invention. Although the present invention is described in detail with reference to the foregoing embodiments, persons of ordinary skill in the art should understand that they may still make modifications to the technical solutions described in the foregoing embodiments, or make equivalent replacements to some or all of the technical features; however, these modifications or replacements do not make the essence of corresponding technical solutions depart from the scope of the technical solutions in the embodiments of the present invention.

## Claims

1. A device-to-device, D2D, communication module, which is set in a first terminal device, and the D2D communication module comprises:
a routing support unit (11), configured to generate an identification, ID, of the D2D communication module, discover a neighbor D2D communication module, establish a link with the neighbor D2D communication module, and maintain routing information between the D2D communication module and the neighbor D2D communication module, wherein the neighbor D2D communication module is set in a second terminal device; and
a point-to-point communication unit (12), configured to communicate with the neighbor D2D communication module according to the ID of the D2D communication module and the routing information between the D2D communication module and the neighbor D2D communication module;
wherein the point-to-point communication unit (12) is specifically configured to obtain first network data provided by the first terminal device, and transmit the first network data to the neighbor D2D communication module according to the ID of the D2D communication module and the routing information between the D2D communication module and the neighbor D2D communication module;
wherein the routing support unit (11) is further configured to obtain an ID of the neighbor D2D communication module and a port number of an air interface via discovery mechanism,
the point-to-point communication unit (12) is specifically configured to obtain the first network data provided by a first application program on the first terminal device, allocate a first port to the first application program, notify the neighbor D2D communication module that the first application program on the first terminal device transmits data in a connection-oriented communication mode, establish a connection from the ID of the D2D communication module and the first port to the ID of the neighbor D2D communication module and a second port allocated to a second application program by the neighbor D2D communication module, package the first network data to obtain a data packet according to the ID of the D2D communication module, a port number of the first port, the ID of the neighbor D2D communication module, and a port number of the second port allocated to the second application program by the neighbor D2D communication module, and transmit the data packet to the neighbor D2D communication module via the connection, wherein the second application program is an application program which is on the second terminal device and communicates with the first application program.

2. The D2D communication module according to claim 1, wherein the point-to-point communication unit (12) is specifically configured to receive second network data transmitted by the neighbor D2D communication module according to the ID of the D2D communication module and the routing information.

3. The D2D communication module according to claim 1, further comprising:
a public cache database (13), configured to obtain first network data provided by the first terminal device, and being capable of transmit the first network data to the neighbor D2D communication unit via the point-to-point communication unit (12).

4. The D2D communication module according to claim 3, wherein the public cache database (13) is further configured to receive a first query request for querying for third network data transmitted by a first application program on the first terminal device, perform a query according to the first query request and return a first query result to the first application program, wherein the first query request includes identification information of the third network data.

5. The D2D communication module according claim 4, wherein the public cache database (13) is specifically configured to receive the first query request for querying for the third network data transmitted by the first application program, perform a local query according to the identification information of the third network data, if the third network data is obtained through the local query, take the third network data as the first query result and return to the first application program, and if the third network data is not obtained through the local query, query a maintained neighbor index table according to the identification information of the third network data, if there is a neighbor index table including the identification information of the third network data, take an ID of a first neighbor D2D communication module, which corresponds to the neighbor index table including the identification information of the third network data, as the first query result and return to the first application program, wherein the identification information of network data stored in the neighbor D2D communication module is stored in the neighbor index table.

6. The D2D communication module according to claim 5, wherein
the point to point communication unit (12) is specifically configured to receive a second query request transmitted by the first application program, transmit the second query request to the first neighbor D2D communication module according to the ID of the D2D communication module and the routing information and receive a second query result returned by the first neighbor D2D communication module according to the second query request, and then return the second query result to the first application program; the second query request is generated by the first application program according to the ID of the first neighbor D2D communication module when the first query result is the ID of the first neighbor D2D communication module, wherein the second query request comprises the ID of the D2D communication module, a port number of a first port allocated to the first application program by the point-to-point communication unit (12), the ID of the first neighbor D2D communication module, a port number of a third port allocated to a public cache database in the first neighbor D2D communication module by a point-to-point communication unit (12) in the first neighbor D2D communication module, and identification information of the third network data.

7. A device-to-device, D2D, communication method, comprising:
generating (501), by a D2D communication module set in a first terminal device, an identification, ID, of the D2D communication module;
discovering (501), by the D2D communication module, a neighbor D2D communication module, establishing a link with the neighbor D2D communication module, and maintaining routing information between the D2D communication module and the neighbor D2D communication module, wherein the neighbor D2D communication module is set in a second terminal device; and
communicating (502), by the D2D communication module, with the neighbor D2D communication module according to the ID of the D2D communication module and the routing information;
wherein the communicating (502), by the D2D communication module, with the neighbor D2D communication module according to the ID of the D2D communication module and the routing information comprises:
receiving, by the D2D communication module, first network data provided by the first terminal device, and transmitting the first network data to the neighbor D2D communication module according to the ID of the D2D communication module and the routing information;
wherein the method further comprises:
obtaining, by the D2D communication module, an ID of the neighbor D2D communication module and a port number of an air interface via discovery mechanism;
wherein the obtaining, by the D2D communication module, the first network data provided by the first terminal device, and transmitting the first network data to the neighbor D2D communication module according to the ID of the D2D communication module and the routing information comprises:
obtaining, by the D2D communication module, the first network data provided by a first application program on the first terminal device;
allocating, by the D2D communication module, a first port to the first application program, notifying the neighbor D2D module that the first application program on the first terminal device transmits data in a connection-oriented communication mode, establishing a connection from the ID of the D2D communication module and the first port to the ID of the neighbor D2D communication module and a second port allocated to a second application program by the neighbor D2D communication module, packaging the first network data to obtain a data packet according to the ID of the D2D communication module, a port number of the first port, the ID of the neighbor D2D communication module, and a port number of the second port allocated to a second application program by the neighbor D2D communication module, and transmitting the data packet to the neighbor D2D communication module via the connection, wherein the second application program is an application program which is on the second terminal device and communicates with the first application program.

8. The D2D communication method according to claim 7, wherein the communicating (502), by the D2D communication module, with the neighbor D2D communication module according to the ID of the D2D communication module and the routing information comprises:
receiving, by the D2D communication module, second network data transmitted by the neighbor D2D communication module according to the ID of the D2D communication module and the routing information.

9. The D2D communication method according to claim 7, further comprising:
obtaining, by the D2D communication module, first network data provided by the first terminal device, and storing the first network data into a public cache database included in the D2D communication module.

10. The D2D communication method according to claim 9, further comprising:
receiving, by the public cache database, a first query request for querying for third network data transmitted by a first application program on the first terminal device, performing a query according to the first query request, and returning a first query result to the first application program, wherein the first query request comprises identification information of the third network data.

11. The D2D communication method according to claim 10, wherein the performing the query according to the first query request and returning the first query result to the first application program comprises:
performing, by the public cache database, a local query according to the identification information of the third network data;
if the third network data is obtained through the local query, taking, by the public cache database, the third network data as the first query result and returning to the first application; and
if the third network data is not obtained through the local query, querying, by the public cache database, a maintained neighbor index table according to the identification information of the third network data, and if there is a neighbor index table including the identification information of the third network data, taking an ID of a first neighbor D2D communication module, which corresponds to the neighbor index table including the identification information of the third network data, as the first query result and returning to the first application program, wherein identification information of network data stored in the neighbor D2D communication module is stored in the neighbor index table.

12. The D2D communication method according to claim 11, wherein the communicating (502), by the D2D communication module, with the neighbor D2D communication module according to the ID of the D2D communication module and the routing information comprises:
receiving, by the D2D communication module, a second query request transmitted by the first application program; wherein the second query request is generated by the first application program according to the ID of the first neighbor D2D communication module when the first query result is the ID of the first neighbor D2D communication module, and the second query request comprises the ID of the D2D communication module, a port number of a first port allocated to the first application program by the D2D communication module, an ID of the first neighbor D2D communication module, a port number of a third port allocated to a public cache database on the first neighbor D2D communication module by the first neighbor D2D communication module, and identification information of the third network data;
transmitting, by the D2D communication module, the second query request to the first neighbor D2D communication module according to the ID of the D2D communication module and the routing information, and receiving a second query result returned by the first neighbor D2D communication module according to the second query request; and
returning, by the D2D communication module, the second query result to the first application program.

13. The D2D communication method according to any one of claims 9-12, wherein the communicating (502), by the D2D communication module, with the neighbor D2D communication module according to the ID of the D2D communication module and the routing information comprises:
receiving, by the D2D communication module, a third query request transmitted by the neighbor D2D communication module according to the ID of the D2D communication module and the routing information, wherein the third query request comprises the ID of the D2D communication module, a port number of a fourth port allocated to the public cache database by the D2D communication module, an ID of the neighbor D2D communication module, a port number of a fifth port allocated to a third application program on the second terminal device by the neighbor D2D communication module, and identification information of fourth network data which is requested to be queried for by the third application program;
performing, by the D2D communication module, a local query according to the third query request, and returning the third query result to the neighbor D2D communication module.

14. A terminal device, comprising: a device-to-device D2D communication module according to any one of claims 1-6 and at least one D2D air interface;
wherein the D2D communication module is configured to communicate with a neighbor D2D communication module via the at least one D2D air interface.

## Patentansprüche

1. Modul für eine Kommunikation von Gerät zu Gerät (D2D, Device-To-Device), das in einem ersten Endgerät eingerichtet ist, und wobei das Modul für eine D2D-Kommunikation umfasst:
eine Leitweglenkungsunterstützungseinheit (11), die ausgelegt ist, eine Kennung, ID (Identification), des Moduls für eine D2D-Kommunikation zu erzeugen, ein Nachbar-Modul für eine D2D-Kommunikation zu erkennen, eine Verknüpfung mit dem Nachbar-Modul für eine D2D-Kommunikation herzustellen und Leitweglenkungsinformation zwischen dem Modul für eine D2D-Kommunikation und dem Nachbar-Modul für eine D2D-Kommunikation zu verwalten, wobei das Nachbar-Modul für eine D2D-Kommunikation in einem zweiten Endgerät eingerichtet ist; und eine Punkt-zu-Punkt-Kommunikationseinheit (12), die ausgelegt ist, mit dem Nachbar-Modul für eine D2D-Kommunikation gemäß der ID des Moduls für eine D2D-Kommunikation und der Leitweglenkungsinformation zwischen dem Modul für eine D2D-Kommunikation und dem Nachbar-Modul für eine D2D-Kommunikation zu kommunizieren;
wobei die Punkt-zu-Punkt-Kommunikationseinheit (12) insbesondere ausgelegt ist, durch das erste Endgerät bereitgestellte erste Netzwerkdaten zu erhalten und die ersten Netzwerkdaten an das Nachbar-Modul für eine D2D-Kommunikation gemäß der ID des Moduls für eine D2D-Kommunikation und der Leitweglenkungsinformation zwischen dem Modul für eine D2D-Kommunikation und dem Nachbar-Modul für eine D2D-Kommunikation zu übertragen;
wobei die Leitweglenkungsunterstützungseinheit (11) ferner ausgelegt ist, eine ID des Nachbar-Moduls für eine D2D-Kommunikation und eine Portnummer einer Luftschnittstelle über einen Erkennungsmechanismus zu erhalten,
wobei die Punkt-zu-Punkt-Kommunikationseinheit (12) insbesondere ausgelegt ist, die durch ein erstes Anwendungsprogramm auf dem ersten Endgerät bereitgestellten ersten Netzwerkdaten zu erhalten, dem ersten Anwendungsprogramm einen ersten Port zuzuweisen, das Nachbar-Modul für eine D2D-Kommunikation zu benachrichtigen, dass das erste Anwendungsprogramm auf dem ersten Endgerät Daten in einem verbindungsorientierten Kommunikationsmodus überträgt, eine Verbindung von der ID des Moduls für eine D2D-Kommunikation und dem ersten Port zu der ID des Nachbar-Moduls für eine D2D-Kommunikation und einem zweiten Port, der einem zweiten Anwendungsprogramm durch das Nachbar-Modul für eine D2D-Kommunikation zugewiesen ist, herzustellen, die ersten Netzwerkdaten zu paketieren, um ein Datenpaket gemäß der ID des Moduls für eine D2D-Kommunikation, einer Portnummer des ersten Ports, der ID des Nachbar-Moduls für eine D2D-Kommunikation und einer Portnummer des dem zweiten Anwendungsprogramm durch das Nachbar-Modul für eine D2D-Kommunikation zugewiesenen zweiten Ports zu erhalten, und das Datenpaket über die Verbindung an das Nachbar-Modul für eine D2D-Kommunikation zu übertragen, wobei das zweite Anwendungsprogramm ein Anwendungsprogramm ist, das auf dem zweiten Endgerät ist und mit dem ersten Anwendungsprogramm kommuniziert.

2. Modul für eine D2D-Kommunikation nach Anspruch 1, wobei die Punkt-zu-Punkt-Kommunikationseinheit (12) insbesondere ausgelegt ist, durch das Nachbar-Modul für eine D2D-Kommunikation gemäß der ID des Moduls für eine D2D-Kommunikation und der Leitweglenkungsinformation übertragene zweite Netzwerkdaten zu empfangen.

3. Modul für eine D2D-Kommunikation nach Anspruch 1, das ferner umfasst:
eine öffentliche Cache-Datenbank (13), die ausgelegt ist, durch das erste Endgerät bereitgestellte erste Netzwerkdaten zu erhalten, und in der Lage ist, die ersten Netzwerkdaten über die Punkt-zu-Punkt-Kommunikationseinheit (12) an die NachbarEinheit für eine D2D-Kommunikation zu übertragen.

4. Modul für eine D2D-Kommunikation nach Anspruch 3, wobei die öffentliche Cache-Datenbank (13) ferner ausgelegt ist, eine durch ein erstes Anwendungsprogramm auf dem ersten Endgerät übertragene erste Abfrageanforderung zum Abfragen von dritten Netzwerkdaten zu empfangen, eine Abfrage gemäß der ersten Abfrageanforderung durchzuführen und ein erstes Abfrageergebnis an das erste Anwendungsprogramm zurückzugeben, wobei die erste Abfrageanforderung Identifizierungsinformation der dritten Netzwerkdaten enthält.

5. Modul für eine D2D-Kommunikation nach Anspruch 4, wobei die öffentliche Cache-Datenbank (13) insbesondere ausgelegt ist, die durch das erste Anwendungsprogramm übertragene erste Abfrageanforderung zum Abfragen der dritten Netzwerkdaten zu empfangen, eine lokale Abfrage gemäß der Identifizierungsinformation der dritten Netzwerkdaten durchzuführen, wenn die dritten Netzwerkdaten durch die lokale Abfrage erhalten werden, die dritten Netzwerkdaten als das erste Abfrageergebnis zu verwenden und an das erste Anwendungsprogramm zurückzugeben, und wenn die dritten Netzwerkdaten nicht durch die lokale Abfrage erhalten werden, eine verwaltete Nachbar-Indextabelle gemäß der Identifizierungsinformation der dritten Netzwerkdaten abzufragen, wenn eine Nachbar-Indextabelle vorhanden ist, die die Identifizierungsinformation der dritten Netzwerkdaten enthält, eine ID eines ersten Nachbar-Moduls für eine D2D-Kommunikation, das der Nachbar-Indextabelle entspricht, die die Identifizierungsinformation der dritten Netzwerkdaten enthält, als das erste Abfrageergebnis zu verwenden und an das erste Anwendungsprogramm zurückzugeben, wobei die in dem Nachbar-Modul für eine D2D-Kommunikation gespeicherte Identifizierungsinformation von Netzwerkdaten in der Nachbar-Indextabelle gespeichert ist.

6. Modul für eine D2D-Kommunikation nach Anspruch 5, wobei die Punkt-zu-Punkt-Kommunikationseinheit (12) insbesondere ausgelegt ist, eine durch das erste Anwendungsprogramm übertragene zweite Abfrageanforderung zu empfangen, die zweite Abfrageanforderung an das erste Nachbar-Modul für eine D2D-Kommunikation gemäß der ID des Moduls für eine D2D-Kommunikation und der Leitweglenkungsinformation zu übertragen und ein durch das erste Nachbar-Modul für eine D2D-Kommunikation gemäß der zweiten Abfrageanforderung zurückgegebenes zweites Abfrageergebnis zu empfangen und anschließend das zweite Abfrageergebnis an das erste Anwendungsprogramm zurückzugeben; wobei die zweite Abfrageanforderung durch das erste Anwendungsprogramm gemäß der ID des ersten Nachbar-Moduls für eine D2D-Kommunikation erzeugt wird, wenn das erste Abfrageergebnis die ID des ersten Nachbar-Moduls für eine D2D-Kommunikation ist, wobei die zweite Abfrageanforderung die ID des Moduls für eine D2D-Kommunikation, eine Portnummer eines dem ersten Anwendungsprogramm durch die Punkt-zu-Punkt-Kommunikationseinheit (12) zugewiesenen ersten Ports, die ID des ersten Nachbar-Moduls für eine D2D-Kommunikation, eine Portnummer eines einer öffentlichen Cache-Datenbank in dem ersten Nachbar-Modul für eine D2D-Kommunikation durch eine Punkt-zu-Punkt-Kommunikationseinheit (12) in dem ersten Nachbar-Modul für eine D2D-Kommunikation zugewiesenen dritten Ports und Identifizierungsinformation der dritten Netzwerkdaten umfasst.

7. Verfahren für eine Kommunikation von Gerät zu Gerät (D2D), das umfasst:
Erzeugen (501), durch ein Modul für eine D2D-Kommunikation, das in einem ersten Endgerät eingerichtet ist, einer Kennung, ID, des Moduls für eine D2D-Kommunikation;
Erkennen (501), durch das Modul für eine D2D-Kommunikation, eines Nachbar-Moduls für eine D2D-Kommunikation, Herstellen einer Verknüpfung mit dem Nachbar-Modul für eine D2D-Kommunikation und Verwalten von Leitweglenkungsinformation zwischen dem Modul für eine D2D-Kommunikation und
dem Nachbar-Modul für eine D2D-Kommunikation, wobei das Nachbar-Modul für eine D2D-Kommunikation in einem zweiten Endgerät eingerichtet ist; und
Kommunizieren (502), durch das Modul für eine D2D-Kommunikation, mit dem Nachbar-Modul für eine D2D-Kommunikation gemäß der ID des Moduls für eine D2D-Kommunikation und der Leitweglenkungsinformation;
wobei das Kommunizieren (502), durch das Modul für eine D2D-Kommunikation, mit dem Nachbar-Modul für eine D2D-Kommunikation gemäß der ID des Moduls für eine D2D-Kommunikation und der Leitweglenkungsinformation umfasst:
Empfangen, durch das Modul für eine D2D-Kommunikation, von durch das erste Endgerät bereitgestellten ersten Netzwerkdaten, und Übertragen der ersten Netzwerkdaten an das Nachbar-Modul für eine D2D-Kommunikation gemäß der ID des Moduls für eine D2D-Kommunikation und der Leitweglenkungsinformation;
wobei das Verfahren ferner umfasst:
Erhalten, durch das Modul für eine D2D-Kommunikation, einer ID des Nachbar-Moduls für eine D2D-Kommunikation und einer Portnummer einer Luftschnittstelle über einen Erkennungsmechanismus;
wobei das Erhalten, durch das Modul für eine D2D-Kommunikation, der durch das erste Endgerät bereitgestellten ersten Netzwerkdaten, und Übertragen der ersten Netzwerkdaten an das Nachbar-Modul für eine D2D-Kommunikation gemäß der ID des Moduls für eine D2D-Kommunikation und der Leitweglenkungsinformation umfasst:
Erhalten, durch das Modul für eine D2D-Kommunikation, der durch ein erstes Anwendungsprogramm auf dem ersten Endgerät bereitgestellten ersten Netzwerkdaten;
Zuweisen, durch das Modul für eine D2D-Kommunikation, eines ersten Ports zu dem ersten Anwendungsprogramm, Benachrichtigen des Nachbar-D2D-Moduls, dass das erste Anwendungsprogramm auf dem ersten Endgerät Daten in einem verbindungsorientierten Kommunikationsmodus überträgt, Herstellen einer Verbindung von der ID des Moduls für eine D2D-Kommunikation und dem ersten Port zu der ID des Nachbar-Moduls für eine D2D-Kommunikation und einem einem zweiten Anwendungsprogramm durch das Nachbar-Modul für eine D2D-Kommunikation zugewiesenen zweiten Port, Paketieren der ersten Netzwerkdaten, um ein Datenpaket gemäß der ID des Moduls für eine D2D-Kommunikation, einer Portnummer des ersten Ports, der ID des Nachbar-Moduls für eine D2D-Kommunikation und einer Portnummer des einem zweiten Anwendungsprogramm durch das Nachbar-Modul für eine D2D-Kommunikation zugewiesenen zweiten Ports zu erhalten, und Übertragen des Datenpakets über die Verbindung an das Nachbar-Modul für eine D2D-Kommunikation, wobei das zweite Anwendungsprogramm ein Anwendungsprogramm ist, das auf dem zweiten Endgerät ist und mit dem ersten Anwendungsprogramm kommuniziert.

8. Verfahren für eine D2D-Kommunikation nach Anspruch 7, wobei das Kommunizieren (502), durch das Modul für eine D2D-Kommunikation, mit dem Nachbar-Modul für eine D2D-Kommunikation gemäß der ID des Moduls für eine D2D-Kommunikation und der Leitweglenkungsinformation umfasst:
Empfangen, durch das Modul für eine D2D-Kommunikation, von durch das Nachbar-Modul für eine D2D-Kommunikation gemäß der ID des Moduls für eine D2D-Kommunikation und der Leitweglenkungsinformation übertragenen zweiten Netzwerkdaten.

9. Verfahren für eine D2D-Kommunikation nach Anspruch 7, das ferner umfasst:
Erhalten, durch das Modul für eine D2D-Kommunikation, von durch das erste Endgerät bereitgestellten ersten Netzwerkdaten, und Speichern der ersten Netzwerkdaten in einer in dem Modul für eine D2D-Kommunikation enthaltenen öffentlichen Cache-Datenbank.

10. Verfahren für eine D2D-Kommunikation nach Anspruch 9, das ferner umfasst:
Empfangen, durch die öffentliche Cache-Datenbank, einer durch ein erstes Anwendungsprogramm auf dem ersten Endgerät übertragenen ersten Abfrageanforderung zum Abfragen von dritten Netzwerkdaten, Durchführen einer Abfrage gemäß der ersten Abfrageanforderung, und Zurückgeben eines ersten Abfrageergebnisses an das erste Anwendungsprogramm, wobei die erste Abfrageanforderung Identifizierungsinformation der dritten Netzwerkdaten umfasst.

11. Verfahren für eine D2D-Kommunikation nach Anspruch 10, wobei das Durchführen der Abfrage gemäß der ersten Abfrageanforderung und Zurückgeben des ersten Abfrageergebnisses an das erste Anwendungsprogramm umfasst:
Durchführen, durch die öffentliche Cache-Datenbank, einer lokalen Abfrage gemäß der Identifizierungsinformation der dritten Netzwerkdaten;
wenn die dritten Netzwerkdaten durch die lokale Abfrage erhalten werden, Verwenden, durch die öffentliche Cache-Datenbank, der dritten Netzwerkdaten als das erste Abfrageergebnis und Zurückgeben an die erste Anwendung; und
wenn die dritten Netzwerkdaten nicht durch die lokale Abfrage erhalten werden, Abfragen, durch die öffentliche Cache-Datenbank, einer verwalteten Nachbar-Indextabelle gemäß der Identifizierungsinformation der dritten Netzwerkdaten, und wenn eine Nachbar-Indextabelle vorhanden ist, die die Identifizierungsinformation der dritten Netzwerkdaten enthält, Verwenden einer ID eines ersten Nachbar-Moduls für eine D2D-Kommunikation, das der Nachbar-Indextabelle entspricht, die die Identifizierungsinformation der dritten Netzwerkdaten enthält, als das erste Abfrageergebnis und Zurückgeben an das erste Anwendungsprogramm, wobei in dem Nachbar-Modul für eine D2D-Kommunikation gespeicherte Identifizierungsinformation von Netzwerkdaten in der Nachbar-Indextabelle gespeichert ist.

12. Verfahren für eine D2D-Kommunikation nach Anspruch 11, wobei das Kommunizieren (502), durch das Modul für eine D2D-Kommunikation, mit dem Nachbar-Modul für eine D2D-Kommunikation gemäß der ID des Moduls für eine D2D-Kommunikation und der Leitweglenkungsinformation umfasst:
Empfangen, durch das Modul für eine D2D-Kommunikation, einer durch das erste Anwendungsprogramm übertragenen zweiten Abfrageanforderung; wobei die zweite Abfrageanforderung durch das erste Anwendungsprogramm gemäß der ID des ersten Nachbar-Moduls für eine D2D-Kommunikation erzeugt wird, wenn das erste Abfrageergebnis die ID des ersten Nachbar-Moduls für eine D2D-Kommunikation ist, und wobei die zweite Abfrageanforderung die ID des Moduls für eine D2D-Kommunikation, eine Portnummer eines dem ersten Anwendungsprogramm durch das Modul für eine D2D-Kommunikation zugewiesenen ersten Ports, eine ID des ersten Nachbar-Moduls für eine D2D-Kommunikation, eine Portnummer eines einer öffentlichen Cache-Datenbank auf dem ersten Nachbar-Modul für eine D2D-Kommunikation durch das erste Nachbar-Modul für eine D2D-Kommunikation zugewiesenen dritten Ports und Identifizierungsinformation der dritten Netzwerkdaten umfasst;
Übertragen, durch das Modul für eine D2D-Kommunikation, der zweiten Abfrageanforderung an das erste Nachbar-Modul für eine D2D-Kommunikation gemäß der ID des Moduls für eine D2D-Kommunikation und der Leitweglenkungsinformation, und Empfangen eines durch das erste Nachbar-Modul für eine D2D-Kommunikation gemäß der zweiten Abfrageanforderung zurückgegebenen zweiten Abfrageergebnisses; und
Zurückgeben, durch das Modul für eine D2D-Kommunikation, des zweiten Abfrageergebnisses an das erste Anwendungsprogramm.

13. Verfahren für eine D2D-Kommunikation nach einem der Ansprüche 9-12, wobei das Kommunizieren (502), durch das Modul für eine D2D-Kommunikation, mit dem Nachbar-Modul für eine D2D-Kommunikation gemäß der ID des Moduls für eine D2D-Kommunikation und der Leitweglenkungsinformation umfasst:
Empfangen, durch das Modul für eine D2D-Kommunikation, einer durch das Nachbar-Modul für eine D2D-Kommunikation gemäß der ID des Moduls für eine D2D-Kommunikation und der Leitweglenkungsinformation übertragenen dritten Abfrageanforderung, wobei die dritte Abfrageanforderung die ID des Moduls für eine D2D-Kommunikation, eine Portnummer eines der öffentlichen Cache-Datenbank durch das Modul für eine D2D-Kommunikation zugewiesenen vierten Ports, eine ID des Nachbar-Moduls für eine D2D-Kommunikation, eine Portnummer eines einem dritten Anwendungsprogramm auf dem zweiten Endgerät durch das Nachbar-Modul für eine D2D-Kommunikation zugewiesenen fünften Ports und Identifizierungsinformation von vierten Netzwerkdaten, deren Abfrage durch das dritte Anwendungsprogramm angefordert wird, umfasst;
Durchführen, durch das Modul für eine D2D-Kommunikation, einer lokalen Abfrage gemäß der dritten Abfrageanforderung, und Zurückgeben des dritten Abfrageergebnisses an das Nachbar-Modul für eine D2D-Kommunikation.

14. Endgerät, umfassend: ein Modul für eine Kommunikation von Gerät zu Gerät, D2D, nach einem der Ansprüche 1-6 und mindestens eine D2D-Luftschnittstelle;
wobei das Modul für eine D2D-Kommunikation ausgelegt ist, mit einem Nachbar-Modul für eine D2D-Kommunikation über die mindestens eine D2D-Luftschnittstelle zu kommunizieren.

## Revendications

1. Module de communication entre dispositifs (D2D), qui est établi dans un premier dispositif terminal, le module de communication D2D comprenant :
une unité de prise en charge de routage (11), configurée pour générer une identification (ID) du module de communication D2D, pour découvrir un module de communication D2D voisin, pour établir une liaison avec le module de communication D2D voisin et pour tenir à jour des informations de routage entre le module de communication D2D et le module de communication D2D voisin, le module de communication D2D voisin étant établi dans un second dispositif terminal ; et
une unité de communication point-à-point (12), configurée pour communiquer avec le module de communication D2D voisin selon l'ID du module de communication D2D et les informations de routage entre le module de communication D2D et le module de communication D2D voisin ;
l'unité de communication point-à-point (12) étant spécifiquement configurée pour obtenir des premières données de réseau fournies par le premier dispositif terminal et pour transmettre les premières données de réseau au module de communication D2D voisin selon l'ID du module de communication D2D et les informations de routage entre le module de communication D2D et le module de communication D2D voisin ; l'unité de prise en charge de routage (11) étant en outre configurée pour obtenir une ID du module de communication D2D voisin et un numéro de port d'une interface radio par l'intermédiaire d'un mécanisme de découverte ;
l'unité de communication point-à-point (12) étant spécifiquement configurée pour obtenir les premières données de réseau fournies par un premier programme d'application sur le premier dispositif terminal, pour affecter un premier port au premier programme d'application, pour notifier au module de communication D2D voisin que le premier programme d'application sur le premier dispositif terminal transmet des données dans un mode de communication orienté connexion, pour établir une connexion de l'ID du module de communication D2D et du premier port à l'ID du module de communication D2D voisin et à un deuxième port affecté à un deuxième programme d'application par le module de communication D2D voisin, pour empaqueter les premières données de réseau afin d'obtenir un paquet de données selon l'ID du module de communication D2D, un numéro de port du premier port, l'ID du module de communication D2D voisin et un numéro de port du deuxième port affecté au deuxième programme d'application par le module de communication D2D voisin, et pour transmettre le paquet de données au module de communication D2D voisin par l'intermédiaire de la connexion, le deuxième programme d'application étant un programme d'application qui est sur le second dispositif terminal et qui communique avec le premier programme d'application.

2. Module de communication D2D selon la revendication 1, dans lequel l'unité de communication point-à-point (12) est spécifiquement configurée pour recevoir des deuxièmes données de réseau transmises par le module de communication D2D voisin selon l'ID du module de communication D2D et les informations de routage.

3. Module de communication D2D selon la revendication 1, comprenant en outre :
une base de données publique de mise en cache (13), configurée pour obtenir des premières données de réseau fournies par le premier dispositif terminal et capable de transmettre les premières données de réseau à l'unité de communication D2D voisine par l'intermédiaire de l'unité de communication point-à-point (12).

4. Module de communication D2D selon la revendication 3, dans lequel la base de données publique de mise en cache (13) est en outre configurée pour recevoir une première demande de requête pour requêter des troisièmes données de réseau transmises par un premier programme d'application sur le premier dispositif terminal, pour réaliser une requête selon la première demande de requête et renvoyer un premier résultat de requête au premier programme d'application, la première demande de requête incluant des informations d'identification des troisièmes données de réseau.

5. Module de communication D2D selon la revendication 4, dans lequel la base de données publique de mise en cache (13) est spécifiquement configurée pour recevoir la première demande de requête pour requêter les troisièmes données de réseau transmises par le premier programme d'application, pour réaliser une requête locale selon les informations d'identification des troisièmes données de réseau, si les troisièmes données de réseau sont obtenues par l'intermédiaire de la requête locale, pour prendre les troisièmes données de réseau comme le premier résultat de requête et le renvoyer au premier programme d'application, et si les troisièmes données de réseau ne sont pas obtenues par l'intermédiaire de la requête locale, pour requêter une table tenue à jour d'indices de voisin selon les informations d'identification des troisièmes données de réseau, s'il y a une table d'indices de voisin incluant les informations d'identification des troisièmes données de réseau, pour prendre une ID d'un premier module de communication D2D voisin, qui correspond à la table d'indices de voisin incluant les informations d'identification des troisièmes données de réseau, comme le premier résultat de requête et le renvoyer au premier programme d'application, les informations d'identification de données de réseau stockées dans le module de communication D2D voisin étant stockées dans la table d'indices de voisin.

6. Module de communication D2D selon la revendication 5, dans lequel :
l'unité de communication point-à-point (12) est spécifiquement configurée pour recevoir une deuxième demande de requête transmise par le premier programme d'application, pour transmettre la deuxième demande de requête au premier module de communication D2D voisin selon l'ID du module de communication D2D et les informations de routage et pour recevoir un deuxième résultat de requête renvoyé par le premier module de communication D2D voisin selon la deuxième demande de requête, puis pour renvoyer le deuxième résultat de requête au premier programme d'application ; la deuxième demande de requête est générée par le premier programme d'application selon l'ID du premier module de communication D2D voisin quand le premier résultat de requête est l'ID du premier module de communication D2D voisin, la deuxième demande de requête comprenant l'ID du module de communication D2D, un numéro de port d'un premier port affecté au premier programme d'application par l'unité de communication point-à-point (12), l'ID du premier module de communication D2D voisin, un numéro de port d'un troisième port affecté à une base de données publique de mise en cache dans le premier module de communication D2D voisin par une unité de communication point-à-point (12) dans le premier module de communication D2D voisin, et des informations d'identification des troisièmes données de réseau.

7. Procédé de communication entre dispositifs (D2D), comprenant les étapes consistant à :
générer (501), par un module de communication D2D établi dans un premier dispositif terminal, une identification (ID) du module de communication D2D ;
découvrir (501), par le module de communication D2D, un module de communication D2D voisin, établir une liaison avec le module de communication D2D voisin et tenir à jour des informations de routage entre le module de communication D2D et le module de communication D2D voisin, le module de communication D2D voisin étant établi dans un second dispositif terminal ; et
communiquer (502), par le module de communication D2D, avec le module de communication D2D voisin selon l'ID du module de communication D2D et les informations de routage ;
la communication (502), par le module de communication D2D, avec le module de communication D2D voisin selon l'ID du module de communication D2D et les informations de routage comprenant l'étape consistant à :
recevoir, par le module de communication D2D, des premières données de réseau fournies par le premier dispositif terminal et transmettre les premières données de réseau au module de communication D2D voisin selon l'ID du module de communication D2D et les informations de routage ;
le procédé comprenant en outre l'étape consistant à :
obtenir, par le module de communication D2D, une ID du module de communication D2D voisin et un numéro de port d'une interface radio par l'intermédiaire d'un mécanisme de découverte ;
l'obtention, par le module de communication D2D, des premières données de réseau fournies par le premier dispositif terminal et la transmission des premières données de réseau au module de communication D2D voisin selon l'ID du module de communication D2D et les informations de routage comprenant les étapes consistant à :
obtenir, par le module de communication D2D, les premières données de réseau fournies par un premier programme d'application sur le premier dispositif terminal ;
et
affecter, par le module de communication D2D, un premier port au premier programme d'application, notifier au module de communication D2D voisin que le premier programme d'application sur le premier dispositif terminal transmet des données dans un mode de communication orienté connexion, établir une connexion de l'ID du module de communication D2D et du premier port à l'ID du module de communication D2D voisin et à un deuxième port affecté à un deuxième programme d'application par le module de communication D2D voisin, empaqueter les premières données de réseau afin d'obtenir un paquet de données selon l'ID du module de communication D2D, un numéro de port du premier port, l'ID du module de communication D2D voisin et un numéro de port du deuxième port affecté à un deuxième programme d'application par le module de communication D2D voisin, et transmettre le paquet de données au module de communication D2D voisin par l'intermédiaire de la connexion, le deuxième programme d'application étant un programme d'application qui est sur le second dispositif terminal et qui communique avec le premier programme d'application.

8. Procédé de communication D2D selon la revendication 7, dans lequel la communication (502), par le module de communication D2D, avec le module de communication D2D voisin selon l'ID du module de communication D2D et les informations de routage, comprend l'étape consistant à :
recevoir, par le module de communication D2D, des deuxièmes données de réseau transmises par le module de communication D2D voisin selon l'ID du module de communication D2D et les informations de routage.

9. Procédé de communication D2D selon la revendication 7, comprenant en outre l'étape consistant à :
obtenir, par le module de communication D2D, des premières données de réseau fournies par le premier dispositif terminal et stocker les premières données de réseau dans une base de données publique de mise en cache incluse dans le module de communication D2D.

10. Procédé de communication D2D selon la revendication 9, comprenant en outre l'étape consistant à :
recevoir, par la base de données publique de mise en cache, une première demande de requête pour requêter des troisièmes données de réseau transmises par un premier programme d'application sur le premier dispositif terminal, réaliser une requête selon la première demande de requête et renvoyer un premier résultat de requête au premier programme d'application, la première demande de requête comprenant des informations d'identification des troisièmes données de réseau.

11. Procédé de communication D2D selon la revendication 10, dans lequel la réalisation de la requête selon la première demande de requête et le renvoi du premier résultat de requête au premier programme d'application comprennent les étapes consistant à :
réaliser, par la base de données publique de mise en cache, une requête locale selon les informations d'identification des troisièmes données de réseau ;
si les troisièmes données de réseau sont obtenues par l'intermédiaire de la requête locale, prendre, par la base de données publique de mise en cache, les troisièmes données de réseau comme le premier résultat de requête et le renvoyer au premier programme d'application ; et
si les troisièmes données de réseau ne sont pas obtenues par l'intermédiaire de la requête locale, requêter, par la base de données publique de mise en cache, une table tenue à jour d'indices de voisin selon les informations d'identification des troisièmes données de réseau, et s'il y a une table d'indices de voisin incluant les informations d'identification des troisièmes données de réseau, prendre une ID d'un premier module de communication D2D voisin, qui correspond à la table d'indices de voisin incluant les informations d'identification des troisièmes données de réseau, comme le premier résultat de requête et le renvoyer au premier programme d'application, les informations d'identification de données de réseau stockées dans le module de communication D2D voisin étant stockées dans la table d'indices de voisin.

12. Procédé de communication D2D selon la revendication 11, dans lequel la communication (502), par le module de communication D2D, avec le module de communication D2D voisin selon l'ID du module de communication D2D et les informations de routage, comprend les étapes consistant à :
recevoir, par le module de communication D2D, une deuxième demande de requête transmise par le premier programme d'application ; la deuxième demande de requête étant générée par le premier programme d'application selon l'ID du premier module de communication D2D voisin quand le premier résultat de requête est l'ID du premier module de communication D2D voisin et la deuxième demande de requête comprenant l'ID du module de communication D2D, un numéro de port d'un premier port affecté au premier programme d'application par le module de communication D2D, une ID du premier module de communication D2D voisin, un numéro de port d'un troisième port affecté à une base de données publique de mise en cache sur le premier module de communication D2D voisin par le premier module de communication D2D voisin, et des informations d'identification des troisièmes données de réseau ;
transmettre, par le module de communication D2D, la deuxième demande de requête au premier module de communication D2D voisin selon l'ID du module de communication D2D et les informations de routage et recevoir un deuxième résultat de requête renvoyé par le premier module de communication D2D voisin selon la deuxième demande de requête ; et
renvoyer, par le module de communication D2D, le deuxième résultat de requête au premier programme d'application.

13. Procédé de communication D2D selon l'une quelconque des revendications 9 à 12, dans lequel la communication (502), par le module de communication D2D, avec le module de communication D2D voisin selon l'ID du module de communication D2D et les informations de routage, comprend les étapes consistant à :
recevoir, par le module de communication D2D, une troisième demande de requête transmise par le module de communication D2D voisin selon l'ID du module de communication D2D et les informations de routage, la troisième demande de requête comprenant l'ID du module de communication D2D, un numéro de port d'un quatrième port affecté à la base de données publique de mise en cache par le module de communication D2D, une ID du module de communication D2D voisin, un numéro de port d'un cinquième port affecté à un troisième programme d'application sur le second dispositif terminal par le module de communication D2D voisin, et des informations d'identification de quatrièmes données de réseau qui font l'objet d'une demande de requête par le troisième programme d'application ; et
réaliser, par le module de communication D2D, une requête locale selon la troisième demande de requête et renvoyer le troisième résultat de requête au module de communication D2D voisin.

14. Dispositif terminal, comprenant : un module de communication entre dispositifs (D2D) selon l'une quelconque des revendications 1 à 6 et au moins une interface radio D2D ;
le module de communication D2D étant configuré pour communiquer avec un module de communication D2D voisin par l'intermédiaire de l'au moins une interface radio D2D.
